# EUROPEAN PATENT APPLICATION

(11) **EP 0 937 694 A1**
(43) Date of publication of application: **25.08.1999**
(21) Application number: 99301256.6
(22) Date of filing: 22.02.1999
(51) Int. Cl.: C05B 7/00, C05D 9/00

(54) **Plant nutrient composition and method of manufacture**

(30) Priority: 20.02.1998 GB 9803506
(71) Applicant: Fibrophos Limited, London W11 3JQ (GB)
(72) Inventor: Wilson, Francis Neil, Ipswich, Suffolk IP4 3AZ (GB)
(74) Representative: Gemmell, Peter Alan, Dr.

(57) **Abstract**

The present invention comprises a composition for use as a plant nutrient, which composition comprises particulate ash from the incineration of an animal waste, notably the fine particle fly ash obtained from the incineration of pig or poultry litter, characterised in that the alkalinity of the ash, expressed in terms of CaO, has been reduced from a positive value to a zero or negative value, for example to a value of -1 to -3% by weight expressed as CaO, by the addition of a monoammonium and/or monoalkali-metal salt of orthophosphoric acid.

The invention also provides a fertilizer composition comprising the neutralised ash and a process for making a particulate composition which comprises agglomerating particles of the neutralised ash.

## Description

The present invention relates to a composition and to a method for producing it, notably to a fertilizer composition containing burnt animal waste and to a method for making particles containing such a fertilizer.

### BACKGROUND TO THE INVENTION:

Solid animal wastes, for example abattoir wastes, the litter from poultry houses or from the intensive rearing of pigs, are currently being incinerated to generate thermal energy which can be converted into electricity. The incineration process produces ash which is produced in two distinct forms: finely divided fly ash which is recovered from the off-gases using electrostatic precipitators or other techniques, and coarse bottom ash or clinker which is recovered by the use of scrapers, moving chain grates or other techniques from the hearth in which the animal waste was incinerated. Other incineration processes may also be used, for example a fluidised bed type incinerator, which also give rise to ashes. Such ashes represent a by-product which must be disposed of.

The term fly ash particles will be used herein to denote that fraction of the ash from the burning of the animal waste which is recovered from the off-gases of the burning process; and the term clinker ash will be used to denote that fraction of the ash which remains as a solid residue in the grate, hearth or other receptacle or carrier upon which the waste is burnt. Typically, the fly ash will have an average particle size of less than 0.5 millimetres, notably about 100% less than 0.2 millimetres; and the clinker will have a particle size greater than 0.5 mm, notably about 75% greater than 1 mm. Typically, the ash is produced in weight proportions of fly to clinker ash of from about 2:1 to 1:2.

It has been proposed to form solid pellets containing both the clinker and the fly ash by subjecting a mixture of the two ashes to high pressure using a roller or other compaction pelletizing machine or by wetting the ash and subjecting it to tumbling - see for example British Patent Application No. 2272695. Such pellets find use as fertilizers or plant nutrients due to their potassium and phosphorus contents. However, the pellets readily disintegrate and release the fine ash as dust, which is unacceptable for most uses. Furthermore, the pellets lack nitrogen, which is a major plant nutrient, and this limits the potential uses of the ash as a plant nutrient. When attempts are made to increase the nitrogen content of the ash by admixing it with ammonium sources, for example ammonium sulphate or ammonium nitrate, we have found that ammonia is readily evolved from such mixtures and much of the nitrogen added is lost from the mixture and is not retained. This renders the ash and pellets made from it of very limited agronomic use.

We have found that this loss of ammonia is due to the excessive alkalinity of the fly ash and that it is necessary at least partially to neutralise that alkalinity before the ash can be admixed successfully with sources of ammoniacal nitrogen. It has been proposed in, for example Japanese Patent Publications Nos 57140389 and 58151388, to reduce the alkalinity of the ash with sulphuric or phosphoric acids and then to treat the acidified ash with ammonia to increase the nitrogen content of the resultant material.

Surprisingly we have now found that if the alkalinity of the ash is neutralised with a monoammonium or monoalkali-metal salt of orthophosphoric acid, the resultant mixture has a greater level of water soluble phosphorus that can be explained on the soluble phosphorus contents of the initial ingredients. The increase in water soluble phosphorus is of value in enabling the neutralised ash to meet enhanced technical criteria relating to the composition and performance of agricultural and horticultural fertilizers. We have also found that neutralisation of the ash using such monoammonium or monoalkali-metal salts of orthophosphoric acid assists the formation of agglomerated particles of the ash using conventional liquid phase fertilizers granulation techniques as compared to ash which has not been neutralised or has been neutralised using other neutralising agents.

### SUMMARY OF THE INVENTION:

Accordingly, the present invention comprises a composition for use as a plant nutrient, which composition comprises particulate ash from the incineration of an animal waste, characterised in that the alkalinity of the ash, expressed in terms of CaO, has been reduced from a positive value to a zero or negative value by a monoammonium and/or monoalkali-metal salt of orthophosphoric acid.

The invention also provides a fertilizer composition comprising the neutralised ash and a process for making a particulate composition which comprises agglomerating particles of the neutralised ash.

The invention can be applied to a wide range of ashes from the incineration of animal wastes, for example those wastes derived from intensive rearing of animals and poultry, notably from pig or chicken litter, or from abattoir wastes. If desired, the initial waste can have been subjected to pretreatment, for example a de-watering process, before it is incinerated. The waste may consist predominantly of animal faeces and urine, but will usually contain up to 30% or more by weight of fibrous material, for example woodchips, sawdust, hay, straw or shredded paper, used as the bedding or litter upon which the animal is raised and in which some or all of the fluid component of the animal waste is absorbed or as added vegetable waste material to assist combustion of the animal waste. For convenience, the invention will be described hereinafter in terms of the ash derived from the incineration of the litter obtained from the intensive rearing of chickens.

The incineration is carried out using a conventional incineration process under conventional conditions to produce the fly and clinker ashes in weight proportions of from about 60:40 to about 40:60, although other proportions may be produced depending upon the source of the chicken litter and the incineration conditions. The ash can be recovered from the incineration process by any suitable technique. Thus, the fly ash is usually recovered from the flue off gases of the incinerator using electrostatic precipitators and can be used directly in the present invention in the form in which it is recovered. The clinker ash is typically recovered from the grate or hearth of the incinerator using chain scrapers or other means and may need to be comminuted as described below to reduce the particle size thereof to a size suitable for use in the present invention. The clinker ash also tends to crumble when exposed to the weather and such weathered ash may be used as such in the present invention. However, it is preferred to use ash which has not undergone any significant weathering.

The invention can be applied to either form of ash, but is of especial application to ash which has particles of less than about 1 mm mass median particle size. Where the clinker ash has a large particle size, typically greater than 6 mm, it can be subjected to a comminution process, eg. a hammer or ball milling process, to reduce its particle size to less than 1 mm. However, we prefer that the ash particles and the particles of the acidic material have substantially the same particle size to reduce problems due to segregation of different sized particles during the neutralisation process and any subsequent granulation of the neutralised ash. For convenience, the invention will be described hereinafter in terms of the use of fly ash with a particle size of 100% less than 0.2 mm, optionally in admixture with comminuted clinker ash having a similar particle size.

The ash will typically have an alkalinity, expressed as calcium oxide, of from 8 to 12% w/w CaO, usually between 9 and 11. This is measured at ambient temperature by mixing the ash in an excess of 0.5N aqueous hydrochloric acid and back-titrating the resultant mixture using 0.5N aqueous NaOH solution and a phenolphthalein indicator to determine the amount of residual acid in the fluid and hence the amount of acid consumed by the alkalinity of the ash. Such a technique is described in the UK Fertilizer (Sampling and Analysis) Regulations 1991 at Section 15 of Schedule 2, Part 2 under the heading Determining Neutralizing Value in Liming Materials.

Such an alkalinity must be reduced to zero or a negative value, expressed as CaO. This is achieved according to the present invention by treating the ash with monoammonium and/or monoalkali-metal salts of orthophosphoric acid, hereinafter referred to collectively and individually as the salt(s). The salt(s) can be used in fluid form, for example as an aqueous solution of the salt(s), or as a solid particulate form and can be admixed with the ash in any suitable manner. Thus, a clinker ash can be fed to a ball mill or other comminution device to reduce the mass median particle size of the ash to less than 0.2 mm. Particulate salt(s) may also be fed to the comminution device so that they are comminuted and admixed with the ash particles. Other methods for admixing the salt(s) and the ash can be used, for example simple physical mixing of the ingredients in a heap or in a rotary drum, tube or pan mixer where the ash particles already have the desired particle size.

During the mixing of the ash and the salt(s), especially during comminution where intimate contact between the ash and the salt(s) occurs, reaction between the salt(s) and the alkalinity of the ash takes place and this generates heat. It may therefore be desired to cool the reacting mixture, for example by the addition of water to the mixture or by stirring the mixture. The neutralisation reaction may continue beyond the time taken to achieve the desired mixture or particle size for the mixture. The mixture may therefore be discharged from the mixing/comminution process and allowed to stand, for example in a heap which is intermittently turned, to allow the neutralisation of the alkalinity of the ash to go to completion.

However, we have found the neutralisation reaction will usually proceed rapidly and that it is preferable to comminute the ash or the salt(s) to the desired particle size separately and to carry out the admixture in a tumbling bed, as when the particles of the ash and salt(s) are fed to a rotating drum type mixer.

The amount of salt(s) to be admixed with the ash is at least that amount required to neutralise the alkalinity of the ash. This amount can readily be determined by measuring the alkalinity of the ash as described above and using the same technique to measure the negative alkalinity of the salt(s) by reacting it with the 0.5N NaOH and then back titrating the liquid with 0.5N hydrochloric acid to determine the CaO equivalent of the alkali required to neutralise the acidity of the salt(s). From a knowledge of the relative alkalinities of the ash and the salt(s), the amount of salt(s) theoretically required to neutralise the alkalinity of the ash can be calculated. However, in order to ensure that no residual alkalinity remains, it is preferred to use an excess of the salt(s), preferably sufficient to achieve a negative alkalinity of from 1 to 3% expressed as CaO. If desired, the pH of the neutralised ash can be measured to determine that the ash has been completely neutralised. This can be achieved by mixing 10gs of the neutralised ash mixture in 500 mls of de-mineralised water and shaking for 30 minutes at ambient temperature. The residual solids are filtered off and the pH of the resultant fluid is measured at 20°C using a calibrated glass calomel electrode pH meter. Such a technique is described in the UK Fertilizer: (Sampling and Analysis) Regulations 1991 Section 9b of Schedule 2, Part 1 entitled Extraction of Phosphorus by Water and Section 16d of Schedule 2, Part 1 entitled Determination of the pH Value. The pH value of the neutralised ash will be less than 7, for example about 5.5 to 6.7.

The neutralised ash can be admixed with ammoniacal materials and other fertilizer ingredients to form a fertilizer composition of the desired composition. Thus, the neutralized ash can be blended, for example in a conventional rotary drum mixer, with other fertilizer ingredients such as urea, potassium chloride, ammonium and/or potassium nitrate or sulphate, to give a mixture having the desired N, P and K content. However, the fine particle size of the neutralized ash makes it desirable that the mixture be agglomerated in some manner to give particles in the size range 2 to 6 mm which can be handled as a conventional fertilizer using conventional handling equipment. Thus, the neutralised ash or mixtures containing it can be pelletized or agglomerated, for example using a compaction granulation technique.

We have surprisingly found that not only does the use of a monoammonium or monoalkali-metal salt of orthophosphoric acid to neutralize the alkalinity of the ash result in a product having a higher than expected water soluble phosphorus content, but that the neutralised ash mixture granulates better than where other acidic materials are used. Thus, in a particularly preferred embodiment of the invention, the particulate ash is admixed with particulate monoammonium and/or monopotassium dihydrogen phosphate to neutralize the alkalinity of the ash and the resultant mixture granulated to produce an agglomerated particulate mixture of the ash and the phosphate salt which is useful as a plant nutrient.

The granulation is conveniently carried out by forming a tumbling bed of the ash/salt mixture in a rotating pan or drum type granulator with the addition of water to the tumbling bed of particles to cause agglomeration of the tumbling particles. If desired, at least part of the water can be provided by the use of orthophosphoric acid as the acidic material. Typically, the amount of water required to cause agglomeration of the particles will be from 5 to 15% by weight of the dry mixture and may be applied as a spray of water to the tumbling bed of particles and/or as an aqueous solution of one or more of the ingredients of the mixture being granulated. If desired, the water or the materials being granulated can be preheated, for example part of the water required for granulation can be used as steam, to raise the temperature of the mixture to assist granulation.

If desired, the granulation can take place simultaneously with the neutralisation of the ash, as when monoammonium dihydrogen orthophosphate is admixed with the ash in the presence of water in a rotating pan or drum granulator to give a granular product directly.

Granulation is preferably carried out to achieve an average particle size of from 2 to 4 mm using adjustment of the granulation conditions as is known in the fertilizer granulation art to regulate the particle size of the product.

The granular product can be screened to separate over and undersized particles, which can be recycled to the granulation process, and can subjected to further treatment if desired, for example oil or other anti-caking coatings or drying. Surprisingly, where monoammonium and/or a monoalkali-metal dihydrogen orthophosphate is used as the neutralising agent for the ash, granules produced therefrom are harder and more resistant to breakdown during storage and transport than where other forms of acidic material are used to neutralise the ash.

The invention will now be illustrated by the following examples in which all parts and percentages are given by weight unless stated otherwise:

### Example 1.

The fly ash from the incineration of chicken litter had a particle size 100% less than 0.2 mm and an alkalinity of 9% expressed as CaO using the test method described above and provided 21.3%P as P₂O₅ (of which less than 0.01% was water soluble as determined using the test method specified in the UK Fertilizer: (Sampling and Analysis) Regulations 1991) and 25.9%K as K₂O. The ash was not suitable for direct use as an agricultural fertilizer or plant nutrient due not only to its fine particle size but due to its virtual lack of nitrogen.

Ammonium nitrate was added in a weight proportion of 1:1 to the ash in an attempt to increase the nitrogen content of the ash. However, the mixture gave off a strong smell of ammonia and analysis showed that after 24 hours the mixture had retained only 50% of the nitrogen added.

By way of contrast, when the ash was mixed in a closed rotating drum mixer with acidic materials to neutralize the alkalinity of the ash, the amount of nitrogen retained by the neutralized ash was virtually 100% after the same time. The acidic materials used, the pH values and the N, P and K contents of the mixtures were as follows:

| | Composition: Acidic material: | pH of mixture: | N, P, K content of mixture: |
|---|---|---|---|
| A | Single superphosphate | 6.6 | 0% N |
| | | | 18.0%P₂O₅(ws 6.3%) |
| | | | 18.5% K₂O |
| B | Triple superphosphate | 6.2 | 0% N |
| | | | 31.3%P₂O₅(ws 14.2%) |
| | | | 17.6% K₂O |
| C | Monoammonium dihydrogen orthophosphate | 6.6 | 3.5% N |
| | | | 31.9%P₂O₅(ws 21.8%) |
| | | | 17.2% K₂0 |
| D | Monopotassium dihydrogen orthophosphate | 6.5 | 0% N |
| | | | 32.1%P₂O₅(ws 20.2%) |
| | | | 23.1% K₂0 |

The water soluble phosphorus content (ws) of each of the neutralised ashes was determined Using the test method set out in The UK Fertilizer: (Sampling and Analysis) Regulations 1991 at Section 9h, Schedule 2, Part 1 and it was found that the ash neutralised with monoammonium phosphate and monopotassium phosphate salt(s) had water soluble phosphorus contents of 21.8% and 20.2 P₂O₅, which are some 50% and 15% greater respectively than can be accounted for from the arithmetic sum of the contents of the ash and monoammonium or potassium phosphate individually. No such increase in water soluble P₂O₅ for the ash neutralised with the single or triple superphosphates was observed.

### Example 2:

The neutralised ashes from Example 1 were granulated by tumbling the particulate ash in a rotary drum granulator in the presence of added water. The ash neutralised with monoammonium phosphate readily granulated at a water content of about 10% on a dry weight basis to give granules having an average size of from 2 to 4 mm and which were sufficiently hard to withstand drying in a rotary drum drier at 80°C and which were suitable for use in conventional fertilizer handling equipment.

By way of contrast, the un-neutralised fly ash could not readily be granulated even at water contents of up to 15% and tended to form a thick slurry followed by the formation of weak, grossly oversized granules of about 25 mm diameter. The ashes neutralised with superphosphates granulated at water contents of about 10% but gave granules which were weak and readily broke down on handling.

## Claims

1. A composition suitable for use as a plant nutrient, which composition comprises particulate ash from the incineration of an animal waste, characterised in that the alkalinity of the ash, expressed in terms of CaO, has been reduced from a positive value to a zero or negative value by a monoammonium and/or monoalkali-metal salt of orthophosphoric acid.

2. A composition as claimed in claim 1, characterised in that the ash is that which has been obtained by the incineration of pig or poultry litter.

3. A composition as claimed in either of claims 1 or 2, characterised in that the neutralised ash has an alkalinity, expressed as calcium oxide, of from -1 to -3% w/w CaO.

4. A composition as claimed in any one of the preceding claims in admixture with other plant nutrients.

5. A process for making a particulate composition which comprises agglomerating particles of a composition as claimed in any one of claims 1 to 4.

6. A process for producing a particulate plant nutrient composition comprising particulate ash from the incineration of an animal waste whose alkalinity, expressed in terms of CaO, has been reduced from a positive value to a zero or negative value by a monoammonium and/or monoalkali-metal salt of orthophosphoric acid, characterised in that the process comprises admixing the particulate ash with a monoammonium and/or monoalkali-metal salt of orthophosphoric acid to neutralise the alkalinity of the ash and granulating the resultant mixture to produce a particulate product.

7. A process as claimed in claim 6, characterised in that a tumbling bed of the ash/salt mixture is formed in a rotating pan or drum type granulator with the addition of water to the tumbling bed of particles to cause agglomeration of the tumbling particles.

8. A process as claimed in claim 7, characterised in that part of the water required for granulation is provided by the use of orthophosphoric acid.

9. A process as claimed in any one of claims 5 to 8, characterised in that the amount of water is from 5 to 15% by weight of the dry mixture.

10. A process as claimed in any one of claims 5 to 9, characterised in that granulation takes place simultaneously with the neutralisation of the ash by mixing the salt(s) with the ash in the presence of water in a rotating pan or drum granulator.
